# EUROPEAN PATENT APPLICATION

(11) **EP 4 732 660 A1**
(43) Date of publication of application: **29.04.2026**
(21) Application number: 24844631.2
(22) Date of filing: 11.07.2024
(51) Int. Cl.: A01D 34/73

(54) **CUTTING MEMBER DISASSEMBLY AND ASSEMBLY STRUCTURE AND MOWER**

(30) Priority: 21.07.2023 CN 202321939206 U; 31.10.2023 CN 202322939437 U
(71) Applicant: Kutting Technology (Suzhou) Co., Ltd., Suzhou, Jiangsu 215104 (CN)
(72) Inventor: ZHANG, Jie, Suzhou, Jiangsu 215000 (CN); CHEN, Zhen, Suzhou, Jiangsu 215000 (CN); HUANG, Lei, Suzhou, Jiangsu 215000 (CN); CHEN, Binbin, Suzhou, Jiangsu 215000 (CN)
(74) Representative: Gill Jennings & Every LLP
(86) International application number: PCT/CN2024/104917
(87) International publication number: WO 2025/020938

(57) **Abstract**

Disclosed herein are a structure for disassembling and assembling a cutting member and a lawn mower. The structure for disassembling and assembling the cutting member includes a limiting member, a sleeve, and a locking assembly, where the locking assembly includes a locked state and an unlocked state, a blade disc includes a mounting plane having a mounting point for mounting the structure for disassembling and assembling the cutting member and rotates about a rotation axis, and a direction from a projection point of the rotation axis of the blade disc onto the mounting plane to the mounting point is defined as a first direction; when the locking assembly is in the locked state, the limiting member is locked onto the sleeve to restrict a movement stroke of the cutting member; and when the locking assembly is in the unlocked state, the limiting member can disengage from the sleeve, and the cutting member extends along a first straight line and is rotated until the first straight line forms a preset angle with the first direction to disassemble the cutting member. The present application can quickly achieve assembly or disassembly of the cutting member by controlling the locking assembly to lock or unlock the limiting member, without requiring other tools. During the disassembly/assembly of the cutting member, the blade disc does not rotate, avoiding the risk of injury to users and providing high safety.

## Description

The present application claims priority to Chinese Patent Application No. 202321939206.1, filed with the China National Intellectual Property Administration on July 21, 2023 and entitled "STRUCTURE FOR DISASSEMBLING AND ASSEMBLING BLADE, AND SMART LAWN MOWER", which is incorporated herein by reference in its entirety.

The present application claims priority to Chinese Patent Application No. 202322939437.9, filed with the China National Intellectual Property Administration on October 31, 2023 and entitled "STRUCTURE FOR DISASSEMBLING AND ASSEMBLING CUTTING MEMBER, AND LAWN MOWER", which is incorporated herein by reference in its entirety.

### TECHNICAL FIELD

The present application relates to the technical field of lawn mowers and, in particular, to a structure for disassembling and assembling a cutting member and a lawn mower.

### BACKGROUND

Conventional household lawn mowers utilize thin cutting members that are fixed on a blade disc via screws and insert nuts, relying on centrifugal force to cut grass. This mowing method results in severe wear of the cutting members, necessitating frequent replacement. When users replace the cutting members, they need to carry specialized tools, which is highly inconvenient. Furthermore, when the screws are loosened, the blade disc tends to rotate, posing a risk of injury to the users.

### SUMMARY

The purpose of the present application is to provide a structure for disassembling and assembling a cutting member and a lawn mower, so as to solve the technical problem in the prior art that users need to carry specialized tools when replacing cutting members, which is highly inconvenient.

To achieve the aforementioned purpose, a technical solution adopted in the present application is as follows.

The present application provides a structure for disassembling and assembling a cutting member, for connecting the cutting member to a blade disc, including:
a limiting member;
a sleeve; and
a locking assembly, at least partially disposed within a space enclosed by the limiting member and the sleeve, the locking assembly including a locked state and an unlocked state;
where the blade disc includes a mounting plane having a mounting point for mounting the structure for disassembling and assembling the cutting member, the blade disc rotates about a rotation axis, and a direction from a projection point of the rotation axis of the blade disc onto the mounting plane to the mounting point is defined as a first direction;
where when the locking assembly is in the locked state, the limiting member is locked onto the sleeve to restrict a movement stroke of the cutting member; and when the locking assembly is in the unlocked state, the limiting member can disengage from the sleeve, the cutting member extends along a first straight line, and the cutting member is rotated until the first straight line forms a preset angle with the first direction to disassemble the cutting member, such that when the locking assembly is in the locked state, the cutting member does not detach from the blade disc at least when a rotational speed of the blade disc does not exceed 3,500 r/min.

In one or more embodiments, a notch matching a limiting protrusion is arranged in the cutting member; and
the cutting member includes a cutting posture and a disassembly posture, where when the cutting member is in the cutting posture, a portion of an orthographic projection of the limiting protrusion onto the cutting member falls within the notch, and when the cutting member is in the disassembly posture, the orthographic projection of the limiting protrusion onto the cutting member falls within the notch.

In one or more embodiments, the notch includes a long side and a short side, and a dimension of the long side of the notch is greater than a dimension of the short side of the notch.

In one or more embodiments, an angle of 90° is formed between a position where the cutting member is in the disassembly posture and a position where the cutting member is in the cutting posture.

In one or more embodiments, a range of the preset angle is greater than or equal to 45° and less than or equal to 90°.

In one or more embodiments, the limiting member includes a receiving slot, and a side wall of the sleeve is provided with a perforated hole capable of communicating with the receiving slot; and
when the locking assembly is in the locked state, the locking assembly is capable of extending out of the perforated hole and into the receiving slot to restrict relative movement between the limiting member and the sleeve; and when the locking assembly is in the unlocked state, the locking assembly is capable of withdrawing from the receiving slot to avoid interference with a disengagement movement of the limiting member.

In one or more embodiments, the limiting member is a tubular structure, and the receiving slot is disposed in an inner wall of the limiting member; and
the limiting member is capable of being sleeved onto the sleeve, and the receiving slot and the perforated hole are capable of being aligned and communicated, so that the locking assembly is capable of extending into the receiving slot through the perforated hole, and when the locking assembly extends into the receiving slot through the perforated hole, the locking assembly is in the locked state.

In one or more embodiments, a through hole is formed inside the sleeve, and the locking assembly includes:
a pressing shaft, at least partially accommodated within the through hole and slidably connected to the sleeve; and
a locking member, at least partially accommodated within the through hole and at least partially accommodated within the perforated hole;
where when the locking assembly is in the locked state, the locking member abuts within a space enclosed by the pressing shaft, the sleeve, and the limiting member; and when the locking assembly is in the unlocked state, the locking member is capable of withdrawing from the receiving slot.

In one or more embodiments, a side wall of the pressing shaft facing the perforated hole is provided with an unlocking slot and a locking slot arranged sequentially along an axial direction; and
when the locking assembly is in the locked state, one end of the locking member extends into the locking slot, while the other end thereof extends into the receiving slot; and when the locking assembly is in the unlocked state, one end of the locking member extends into the unlocking slot, while the other end thereof disengages from the receiving slot.

In one or more embodiments, a depth of the unlocking slot is greater than a depth of the locking slot.

In one or more embodiments, an extension length of the locking member along an axial direction of the perforated hole is greater than a distance between a bottom wall of the locking slot and an end of the perforated hole proximate to the receiving slot, and is less than or equal to a distance between a bottom wall of the unlocking slot and the end of the perforated hole proximate to the receiving slot.

In one or more embodiments, the sleeve includes a connecting portion capable of extending into the limiting member and a main body portion extending out of the limiting member, an outer wall of an end of the connecting portion proximate to the main body portion is provided with at least one limiting protrusion, and the limiting protrusion matches the notch.

In one or more embodiments, an end of the limiting member proximate to the limiting protrusion is further provided with an annular protruding edge, an accommodating cavity for accommodating the limiting protrusion is formed inside the annular protruding edge, and the limiting protrusion at least partially extends out of the accommodating cavity.

In one or more embodiments, a height by which the limiting protrusion extends out of the accommodating cavity is less than a thickness of the cutting member.

In one or more embodiments, two of the limiting protrusions are symmetrically disposed on the outer wall of the end of the connecting portion proximate to the main body portion, the two limiting protrusions cooperate to form a wing-shaped structure, and the notch is a waist-shaped hole matching the wing-shaped structure.

In one or more embodiments, when the locking assembly is in the locked state, a limiting space for installing the cutting member is formed among the limiting protrusion, the limiting member, and the sleeve, an extension length of the limiting space along an axial direction of the sleeve is greater than a thickness of the cutting member, thereby enabling the cutting member to be rotatably disposed.

In one or more embodiments, an angle of 90° is formed between a position where the cutting member is in the disassembly posture and a position where the cutting member is in the cutting posture.

In one or more embodiments, a cross-section of the connecting portion has a non-circular structure, a limiting cavity is disposed inside the limiting member, and the limiting cavity cooperates with the non-circular structure to restrict relative rotation between the connecting portion and the limiting member.

In one or more embodiments, limiting plates are arranged at intervals along an axial direction of the limiting member, a limiting hole matching the connecting portion is formed in each of the limiting plates, and the limiting holes of a pair of the limiting plates cooperate to form the limiting cavity.

In one or more embodiments, the structure for disassembling and assembling the cutting member further includes a reset member accommodated within the sleeve, where one end of the reset member abuts against the sleeve, while the other end thereof abuts against the locking assembly; and
a reset force direction of the reset member is parallel to a movement direction of the locking assembly, so as to drive the locking assembly to move from the unlocked state to the locked state.

In one or more embodiments, a through hole is formed inside the sleeve, and the locking assembly includes: a pressing shaft, at least partially accommodated within the through hole and slidably connected to the sleeve;
the through hole includes a first hole segment and a second hole segment arranged sequentially along an axial direction, an inner diameter of the second hole segment being smaller than an inner diameter of the first hole segment; the pressing shaft includes a pressing portion and a rod portion arranged sequentially along the axial direction, an outer diameter of the rod portion being smaller than an outer diameter of the pressing portion;
the pressing portion is slidably disposed partially within the first hole segment, and the rod portion is slidably disposed partially within the second hole segment; and
the reset member is sleeved on the rod portion and accommodated within the first hole segment.

In one or more embodiments, an end of the locking member distal from the pressing shaft and/or an end of the locking member proximate to the pressing shaft is arc-shaped.

In one or more embodiments, the locking member is a ball or a pin.

In one or more embodiments, the sleeve includes a connecting portion capable of extending into the limiting member and a main body portion extending out of the limiting member, a side wall of the connecting portion is provided with an anti-rotation recessed zone, and the limiting member engages with the anti-rotation recessed zone and abuts against the main body portion.

To achieve the aforementioned purpose, another technical solution adopted in the present application is as follows.

The present application provides a lawn mower, including:
a blade disc; and
the structure for disassembling and assembling the cutting member according to any one of the foregoing embodiments, fixedly installed on the blade disc, where the pressing shaft of the structure for disassembling and assembling the cutting member partially protrudes from the blade disc.

In one or more embodiments, the sleeve of the structure for disassembling and assembling the cutting member is fixedly connected to the blade disc.

To achieve the aforementioned purpose, another technical solution adopted in the present application is as follows:
a structure for disassembling and assembling a cutting member, for connecting the cutting member to a blade disc, including:
a limiting member;
a sleeve; and
a locking assembly, at least partially disposed within a space enclosed by the limiting member and the sleeve, the locking assembly including a locked state and an unlocked state;
where when the locking assembly is in the locked state, the limiting member is locked onto the sleeve and the cutting member is installed within a limiting space formed between the limiting member and the sleeve to restrict a movement stroke of the cutting member, and within the limiting space, the sleeve protrudes relative to the limiting member toward the cutting member to be closer to the cutting member; and when the locking assembly is in the unlocked state, the limiting member can disengage from the sleeve, thereby enabling the cutting member to be disassembled.

In one or more embodiments, the limiting member includes a receiving slot, and a side wall of the sleeve is provided with a perforated hole capable of communicating with the receiving slot; and
when the locking assembly is in the locked state, the locking assembly is capable of extending out of the perforated hole and into the receiving slot to restrict relative movement between the limiting member and the sleeve; and when the locking assembly is in the unlocked state, the locking assembly is capable of withdrawing from the receiving slot to avoid interference with a disengagement movement of the limiting member.

In one or more embodiments, the limiting member is a tubular structure, and the receiving slot is disposed in an inner wall of the limiting member; and
the limiting member is capable of being sleeved onto the sleeve, and the receiving slot and the perforated hole are capable of being aligned and communicated, so that the locking assembly is capable of extending into the receiving slot through the perforated hole, and when the locking assembly extends into the receiving slot through the perforated hole, the locking assembly is in the locked state.

In one or more embodiments, a through hole is formed inside the sleeve, and the locking assembly includes:
a pressing shaft, at least partially accommodated within the through hole and slidably connected to the sleeve; and
a locking member, at least partially accommodated within the through hole and at least partially accommodated within the perforated hole;
where when the locking assembly is in the locked state, the locking member abuts within a space enclosed by the pressing shaft, the sleeve, and the limiting member; and when the locking assembly is in the unlocked state, the locking member is capable of withdrawing from the receiving slot.

In one or more embodiments, a side wall of the pressing shaft facing the perforated hole is provided with an unlocking slot and a locking slot arranged sequentially along an axial direction; and
when the locking assembly is in the locked state, one end of the locking member extends into the locking slot, while the other end thereof extends into the receiving slot; and when the locking assembly is in the unlocked state, one end of the locking member extends into the unlocking slot, while the other end thereof disengages from the receiving slot.

In one or more embodiments, a depth of the unlocking slot is greater than a depth of the locking slot.

In one or more embodiments, an extension length of the locking member along an axial direction of the perforated hole is greater than a distance between a bottom wall of the locking slot and an end of the perforated hole proximate to the receiving slot, and is less than or equal to a distance between a bottom wall of the unlocking slot and the end of the perforated hole proximate to the receiving slot.

In one or more embodiments, the sleeve includes a connecting portion capable of extending into the limiting member and a main body portion extending out of the limiting member, an outer wall of an end of the connecting portion proximate to the main body portion is provided with at least one limiting protrusion, and a notch matching the limiting protrusion is arranged in the cutting member; and
the cutting member includes a cutting posture and a disassembly posture, where when the cutting member is in the cutting posture, a portion of an orthographic projection of the limiting protrusion onto the cutting member falls within the notch, and when the cutting member is in the disassembly posture, the orthographic projection of the limiting protrusion onto the cutting member falls within the notch.

In one or more embodiments, the notch includes a long side and a short side, and a dimension of the long side of the notch is greater than a dimension of the short side of the notch.

In one or more embodiments, an end of the limiting member proximate to the limiting protrusion is further provided with an annular protruding edge, an accommodating cavity for accommodating the limiting protrusion is formed inside the annular protruding edge, and the limiting protrusion at least partially extends out of the accommodating cavity.

In one or more embodiments, a height by which the limiting protrusion extends out of the accommodating cavity is less than a thickness of the cutting member.

In one or more embodiments, two of the limiting protrusions are symmetrically disposed on the outer wall of the end of the connecting portion proximate to the main body portion, the two limiting protrusions cooperate to form a wing-shaped structure, and the notch is a waist-shaped hole matching the wing-shaped structure.

In one or more embodiments, when the locking assembly is in the locked state, a limiting space for installing the cutting member is formed among the limiting protrusion, the limiting member, and the sleeve, an extension length of the limiting space along an axial direction of the sleeve is greater than a thickness of the cutting member, thereby enabling the cutting member to be rotatably disposed.

In one or more embodiments, an angle of 90° is formed between a position where the cutting member is in the disassembly posture and a position where the cutting member is in the cutting posture.

To achieve the aforementioned purpose, another technical solution adopted in the present application is as follows.

The present application provides a structure for disassembling and assembling a cutting member, including:
a limiting member;
a sleeve; and
a locking assembly, at least partially disposed within a space enclosed by the limiting member and the sleeve, the locking assembly including a locked state and an unlocked state;
where when the locking assembly is in the locked state, the limiting member is locked onto the sleeve to restrict a movement stroke of the cutting member; and when the locking assembly is in the unlocked state, the limiting member can disengage from the sleeve, thereby enabling the cutting member to be disassembled.

In one or more embodiments, the sleeve includes a connecting portion capable of extending into the limiting member and a main body portion extending out of the limiting member, an outer wall of an end of the connecting portion proximate to the main body portion is provided with at least one limiting protrusion, and a notch matching the limiting protrusion is arranged in the cutting member; and
the cutting member includes a cutting posture and a disassembly posture, where when the cutting member is in the cutting posture, a portion of an orthographic projection of the limiting protrusion onto the cutting member falls within the notch, and when the cutting member is in the disassembly posture, the orthographic projection of the limiting protrusion onto the cutting member falls within the notch.

In one or more embodiments, an end of the limiting member proximate to the limiting protrusion is further provided with an annular protruding edge, an accommodating cavity for accommodating the limiting protrusion is formed inside the annular protruding edge, and the limiting protrusion at least partially extends out of the accommodating cavity.

In one or more embodiments, a height by which the limiting protrusion extends out of the accommodating cavity is less than a thickness of the cutting member.

In one or more embodiments, two of the limiting protrusions are symmetrically disposed on the outer wall of the end of the connecting portion proximate to the main body portion, the two limiting protrusions cooperate to form a wing-shaped structure, and the notch is a waist-shaped hole matching the wing-shaped structure.

In one or more embodiments, when the locking assembly is in the locked state, a limiting space for installing the cutting member is formed among the limiting protrusion, the limiting member, and the sleeve, an extension length of the limiting space along an axial direction of the sleeve is greater than a thickness of the cutting member, thereby enabling the cutting member to be rotatably disposed.

Different from the prior art, the present application has the following beneficial effects:
since the structure for disassembling and assembling the cutting member of the present application includes the sleeve and the limiting member, where the cutting member can be sleeved onto the sleeve, and the limiting member can be locked onto an end of the sleeve via the locking assembly to restrict the movement stroke of the cutting member, by controlling the locking assembly to lock or unlock the limiting member, the assembly or disassembly of the cutting member can be quickly achieved without the need for other tools, greatly reducing costs and making operation more convenient; furthermore, the blade disc does not rotate during the disassembly/assembly of the cutting member, avoiding the risk of injury to users.

### BRIEF DESCRIPTION OF DRAWINGS

FIG. 1 is a schematic structural diagram of an embodiment of a structure for disassembling and assembling a cutting member according to the present application.
FIG. 2 is a schematic sectional structural diagram of an embodiment of the structure for disassembling and assembling the cutting member in a locked state according to the present application.
FIG. 3 is a schematic sectional structural diagram of an embodiment of the structure for disassembling and assembling the cutting member in an unlocked state according to the present application.
FIG. 4 is a schematic sectional structural diagram of another embodiment of the structure for disassembling and assembling the cutting member in the locked state according to the present application.
FIG. 5 is a schematic sectional structural diagram of yet another embodiment of the structure for disassembling and assembling the cutting member in the locked state according to the present application.
FIG. 6 is a schematic sectional structural diagram of yet another embodiment of the structure for disassembling and assembling the cutting member in the locked state according to the present application.
FIG. 7 is a schematic sectional structural diagram of yet another embodiment of the structure for disassembling and assembling the cutting member in the locked state according to the present application.
FIG. 8 is a schematic sectional structural diagram of yet another embodiment of the structure for disassembling and assembling the cutting member in the locked state according to the present application.
FIG. 9 is a schematic structural diagram of yet another embodiment of the structure for disassembling and assembling the cutting member according to the present application.
FIG. 10 is a schematic sectional structural diagram of yet another embodiment of the structure for disassembling and assembling the cutting member in the locked state according to the present application.
FIG. 11 is a schematic structural diagram of an embodiment of a cutting member according to the present application.
FIG. 12 is a schematic diagram of a cutting state of an embodiment of the structure for disassembling and assembling the cutting member according to the present application.
FIG. 13 is a schematic top-down structural diagram of yet another embodiment of the structure for disassembling and assembling the cutting member according to the present application.
FIG. 14 is a schematic sectional structural diagram taken along plane A-A in FIG. 13.
FIG. 15 is a schematic sectional structural diagram taken along plane B-B in FIG. 13.
FIG. 16 is a schematic three-dimensional structural diagram of an embodiment of a sleeve according to the present application.
FIG. 17 is a schematic three-dimensional structural diagram of an embodiment of a limiting member according to the present application.
FIG. 18 is a schematic three-dimensional structural diagram of another embodiment of the sleeve according to the present application.
FIG. 19 is a schematic three-dimensional structural diagram of another embodiment of the limiting member according to the present application.
FIG. 20 is a schematic structural diagram of an embodiment of a lawn mower according to the present application.
FIG. 21 is a schematic structural diagram of an embodiment of a blade disc according to the present application.
FIG. 22 is a schematic structural diagram of an embodiment of the lawn mower according to the present application.
FIG. 23 is a schematic diagram of a cutting state of an embodiment of the structure for disassembling and assembling the cutting member according to the present application.

In the figures:
10: structure for disassembling and assembling cutting member;
100: limiting member; 101: receiving slot; 102: protruding edge; 103: accommodating cavity; 104: limiting plate; 1041: limiting hole; 105: limiting cavity;
200: sleeve; 201: through hole; 2011: first hole segment; 2012: second hole segment; 202: perforated hole; 203: mounting protrusion; 204: connecting portion; 2041: anti-rotation recessed zone; 205: main body portion; 2051: limiting protrusion;
300: limiting space;
400: pressing shaft; 401: unlocking slot; 402: locking slot; 403: pressing portion; 404: rod portion; 405: baffle plate; 406: inclined guide surface;
500: locking member;
600: cutting member; 601: notch; 602: cutting end; B: first straight line;
700: reset member;
20: blade disc; 21: mounting hole; 22: mounting plane; 23: mounting point; 24: rotation axis; 25: projection point; A: first direction; and a: preset angle.

### DESCRIPTION OF EMBODIMENTS

Various embodiments of the present application will be described in detail below with reference to the accompanying drawings. However, these embodiments do not limit the present application, and structural, methodological, or functional transformations made by a person of ordinary skill in the art based on these embodiments are all included within the scope of protection of the present application.

Conventional household lawn mowers use screws and insert nuts to fix thin cutting members onto a blade disc, relying on centrifugal force for grass mowing during operation. Since this mowing method causes severe wear on the cutting members, users frequently need to replace the cutting members. However, when users replace the cutting members, they must use specialized tools for disassembly/assembly, which are highly inconvenient to carry and cumbersome to operate. In particular, when the cutting members are disassembled from the blade disc, loosening the screws causes the blade disc to rotate, posing a risk of injury to users.

To solve the aforementioned problems, the applicant has developed a novel structure for disassembling and assembling a cutting member, which does not require other tools, enabling quick disassembly/assembly operations of the cutting member, and avoiding safety hazards during the disassembly/assembly process.

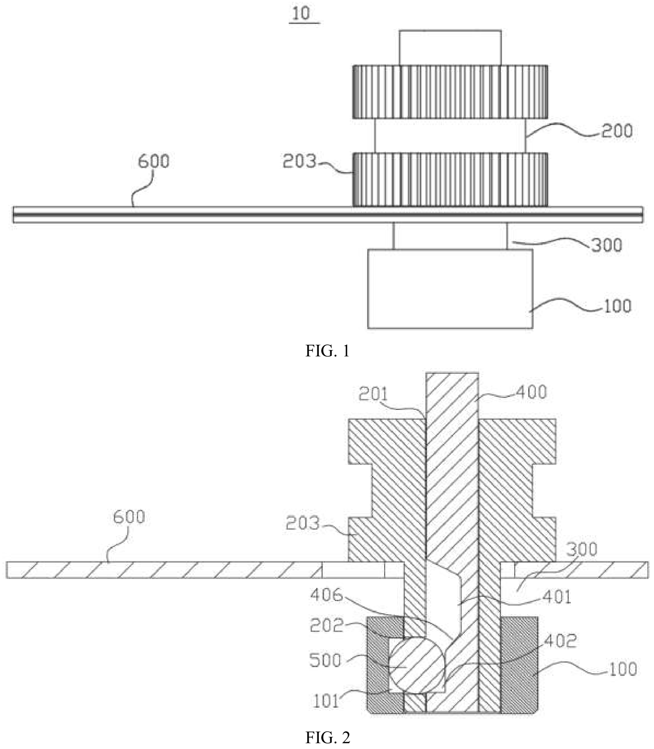

As an optional embodiment, the structure 10 for disassembling and assembling the cutting member is configured to connect a cutting member 600 to a blade disc 20. Specifically, referring to FIG. 1, it is a schematic structural diagram of an embodiment of the structure for disassembling and assembling the cutting member according to the present application.

As shown in the figure, the structure for disassembling and assembling the cutting member includes a sleeve 200 and a limiting member 100, where the limiting member 100 can be locked onto one end of the sleeve 200 and can also be disassembled from the sleeve 200.

The cutting member 600 can be assembled by being sleeved onto the sleeve 200. When the limiting member 100 is locked onto one end of the sleeve 200, the limiting member 100 can restrict the cutting member 600 on the sleeve 200, thereby achieving the assembly of the cutting member 600. When the limiting member 100 is disassembled from the sleeve 200, the cutting member 600 can disengage from the sleeve 200, thereby achieving the disassembly of the cutting member 600. Therefore, quick disassembly/assembly operations of the cutting member 600 can be realized through the disassembly, assembly, and fixation of the limiting member 100.

It is understandable that, to achieve the above detachable design of the cutting member 600, the diameter of an opening in the cutting member 600 should be smaller than the diameter of the limiting member 100, and the sleeve 200 should be provided with a mounting protrusion 203 having a diameter larger than the diameter of the opening in the cutting member 600, thereby achieving the restriction of the cutting member 600 on the sleeve 200.

Further, to enable the cutting member 600 to be rotatably disposed, so that centrifugal force can be utilized for cutting operations, the extension length of a limiting space 300 formed between the mounting protrusion 203 on the sleeve 200 and the limiting member 100 for assembling the cutting member 600 should be greater than the thickness of the cutting member 600.

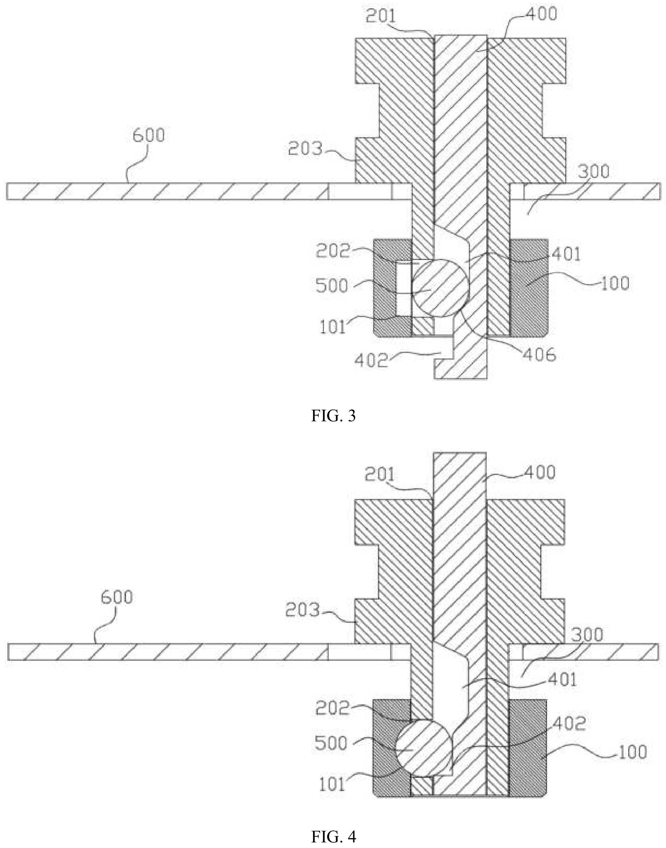

The assembly structure of the limiting member 100 will be described in detail below. Referring to FIGs. 2 and 3, FIG. 2 is a schematic sectional structural diagram of an embodiment of the structure for disassembling and assembling the cutting member in a locked state according to the present application, and FIG. 3 is a schematic sectional structural diagram of an embodiment of the structure for disassembling and assembling the cutting member in an unlocked state according to the present application.

As shown in the figures, the limiting member 100 can be a tubular structure and can be sleeved onto one end of the sleeve 200. A locking assembly can be disposed within a through hole 201 inside the sleeve 200. The locking assembly can be arranged between the limiting member 100 and the sleeve 200 and can include a locked state and an unlocked state. When the locking assembly is in the locked state, the limiting member 100 can be locked onto the sleeve 200 to restrict a movement stroke of the cutting member 600; and when the locking assembly is in the unlocked state, the limiting member 100 can disengage from the sleeve 200, thereby enabling the disassembly of the cutting member 600.

Specifically, in this embodiment, a receiving slot 101 is disposed in an inner wall of the limiting member 100, and a perforated hole 202 communicating with the receiving slot 101 is disposed on a side wall of the sleeve 200. When the limiting member 100 is sleeved onto one end of the sleeve 200, the receiving slot 101 and the perforated hole 202 can be aligned and communicate with each other.

When the locking assembly is in the locked state, it can extend out of the perforated hole 202 and into the receiving slot 101, thereby restricting relative movement between the limiting member 100 and the sleeve 200; and when the locking assembly is in the unlocked state, the locking assembly can withdraw from the receiving slot 101, thereby avoiding interference with a disengagement movement of the limiting member 100.

The structure of the locking assembly will be described in detail below. As shown in the figures, in this embodiment, the locking assembly can include a pressing shaft 400 and a locking member 500, where the pressing shaft 400 is inserted into the through hole 201 from another end of the sleeve 200 and is slidable along an axial direction of the sleeve 200; the locking member 500 can be partially accommodated within the through hole 201 and partially within the perforated hole 202, and the locking member 500 can be arranged to abut against the pressing shaft 400.

A side wall of the pressing shaft 400 facing the locking member 500 can be provided with an uneven surface; therefore, when the pressing shaft 400 slides axially, the unevenness of the surface of the pressing shaft 400 abutting against the locking member 500 can drive the locking member 500 to move radially along the sleeve 200, causing the locking member 500 to extend into the receiving slot 101 or withdraw from the receiving slot 101, thereby achieving switching between the locked state and the unlocked state.

Specifically, in this embodiment, a side wall of the pressing shaft 400 facing the perforated hole 202 is provided with an unlocking slot 401 and a locking slot 402 arranged sequentially along an axial direction, and a depth of the unlocking slot 401 is greater than a depth of the locking slot 402.

Specifically, a bottom of the unlocking slot 401 and a bottom of the locking slot 402 are connected by an inclined guide surface 406, facilitating movement of the pressing shaft 400 relative to the locking member 500 and thereby enabling mutual switching between the locked state and the unlocked state of the locking assembly, particularly facilitating the switching of the locking assembly from the unlocked state to the locked state.

When the pressing shaft 400 slides to a position where a bottom surface of the locking slot 402 abuts against the locking member 500, the bottom surface of the locking slot 402 can push the locking member 500 outward from the perforated hole 202, causing the locking member 500 to extend into the receiving slot 101 in the inner wall of the limiting member 100 and be confined within a space enclosed by the pressing shaft 400, the sleeve 200, and the limiting member 100, thereby locking the limiting member 100; and
when the pressing shaft 400 slides to a position where a bottom surface of the unlocking slot 401 abuts against the locking member 500, since the depth of the unlocking slot 401 is greater than the depth of the locking slot 402, the locking member 500 can be released from its confined state and can withdraw from the receiving slot 101, thereby unlocking the limiting member 100.

To ensure that the locking member 500 can extend into the receiving slot 101 in the locked state and can completely disengage from the receiving slot 101 in the unlocked state, an extension length of the locking member 500 along an axial direction of the perforated hole 202 should be greater than a distance between a bottom wall of the locking slot 402 and an end of the perforated hole 202 proximate to the receiving slot 101, and should be less than or equal to a distance between a bottom wall of the unlocking slot 401 and the end of the perforated hole 202 proximate to the receiving slot 101.

In other embodiments, the side wall of the pressing shaft 400 facing the perforated hole 202 may also employ other designs. For example, a protruding edge 102 structure may be arranged on the side wall of the pressing shaft 400, and when the pressing shaft 400 moves to a position where the protruding edge 102 structure abuts against the locking member 500, the locking member 500 can be pushed into the receiving slot 101, while when the pressing shaft 400 moves to other positions, the locking member 500 can disengage from the receiving slot 101; alternatively, a single groove structure may be arranged on the side wall of the pressing shaft 400, and when the pressing shaft 400 moves to a position where the locking member 500 abuts against the groove, the locking member 500 can disengage from the groove, while when the pressing shaft 400 moves to other positions, the locking member 500 can be pushed into the receiving slot 101. All these designs can achieve the effects of this embodiment.

Furthermore, it is worth noting that in the above embodiment, the pressing shaft 400 is provided with a single unlocking slot 401 and a single locking slot 402 at different axial positions. In other embodiments, the pressing shaft 400 may also be provided with a plurality of unlocking slots 401 and a plurality of locking slots 402. The pressing shaft 400 may also be provided with a mark for indicating a current state, thereby facilitating users in performing unlocking and locking operations.

In this embodiment, the locking member 500 can be a spherical ball structure. Correspondingly, the perforated hole 202 can be a circular hole matching the locking member 500. When the locking member 500 is in the locked state, the circular perforated hole 202 can maximize the contact area between the perforated hole 202 and the locking member 500, thereby ensuring locking stability. The receiving slot 101 can be a square slot. When the locking member 500 is in the locked state, the locking member 500 can abut against the bottom surface of the square receiving slot 101, thereby ensuring stability in the locked state.

In other embodiments, the perforated hole 202 and the receiving slot 101 may also be structures of other shapes. For example, the perforated hole 202 may also be a square hole, or the receiving slot 101 may also be a spherical slot matching the spherical locking member 500. Referring to FIG. 4, which is a schematic sectional structural diagram of another embodiment of the structure for disassembling and assembling the cutting member in the locked state according to the present application, as shown in FIG. 4, the design of the spherical receiving slot 101 can maximize the contact area between the locking member 500 and the receiving slot 101 in the locked state, improving stability in the locked state.

Alternatively, in other embodiments, the locking member 500 may not be a spherical structure. For example, the locking member 500 may also be a cylindrical pin structure, a prismatic structure, or an elliptical structure. Correspondingly, the structures of the perforated hole 202 and the receiving slot 101 can be adaptively adjusted, as long as they can achieve the effect that when the locking member 500 is in the locked state, it abuts against the perforated hole 202 and the receiving slot 101, and when the locking member 500 is in the unlocked state, it can disengage from the receiving slot 101. All such adjustments can achieve the effects of this embodiment. To facilitate a sliding operation of the pressing shaft 400, preferably, an end of the locking member 500 proximate to the pressing shaft 400 is arc-shaped, and an end of the locking member 500 distal from the pressing shaft 400 is arc-shaped. Further, to prevent the locking member 500 from passing through the perforated hole 202 and disengaging from the sleeve 200 when the limiting member 100 disengages from the sleeve 200, preferably, the diameter of the perforated hole 202 is smaller than the diameter of the locking member 500.

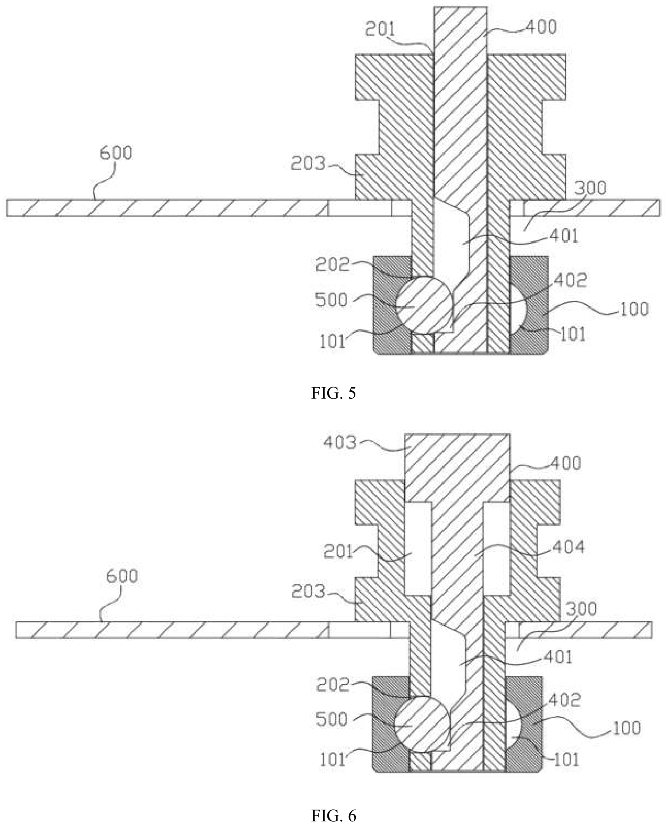

In the above embodiments, only one receiving slot 101 is arranged in the inner wall of the limiting member 100. Therefore, the limiting member 100 can only be sleeved and locked onto the end of the sleeve 200 at a specific angle. In other embodiments, a plurality of receiving slots 101 may also be arranged circumferentially in the inner wall of the limiting member 100, thereby allowing the limiting member 100 to be sleeved and locked onto the end of the sleeve 200 at multiple angles. Alternatively, the receiving slot 101 may also be an annular slot arranged in a circle in the inner wall of the limiting member 100. Referring to FIG. 5, which is a schematic sectional structural diagram of yet another embodiment of the structure for disassembling and assembling the cutting member in the locked state according to the present application, as shown in FIG. 5, an annular receiving slot 101 is arranged in a circle in the inner wall of the limiting member 100, and the inner wall of this receiving slot 101 has an arc shape matching that of the spherical locking member 500, which can also achieve the effects of this embodiment.

It should be noted that the above embodiments only exemplify one installation method of the limiting member 100. In other embodiments, the limiting member 100 may also be locked without being sleeved onto the end of the sleeve 200. For example, the limiting member 100 may also be directly connected to one end of the sleeve 200, and the limiting member 100 can be connected and locked via the receiving slot 101, the locking assembly, and the sleeve 200. The locking assembly can be structurally designed accordingly. For example, the pressing shaft 400 may extend out from the end of the sleeve 200 and be inserted inside the limiting member 100, and the locking member 500 may be arranged inside the limiting member 100 to abut against the pressing shaft 400 and be embedded in the receiving slot 101. All such designs can achieve the effects of this embodiment.

Alternatively, in other embodiments, the locking assembly may also employ other structures to achieve the operations of locking the limiting member 100 when it is sleeved onto the end of the sleeve 200 and unlocking it when it disengages from the end of the sleeve 200. For example, the locking assembly may be a spring structure. During the process where the limiting member 100 slides axially along the sleeve 200 and is sleeved onto the end of the sleeve 200, the locking assembly may be compressed until it reaches the locked position, whereupon the locking assembly extends under the spring force to lock the limiting member 100. Such designs can also achieve the effects of this embodiment.

To facilitate users in controlling the axial movement of the pressing shaft 400 and simultaneously limit the maximum displacement of the pressing shaft 400, referring to FIG. 6, which is a schematic sectional structural diagram of yet another embodiment of the structure for disassembling and assembling the cutting member in the locked state according to the present application, as shown in the figure, the pressing shaft 400 employs a segmented configuration, including a pressing portion 403 and a rod portion 404 arranged sequentially along an axial direction, where an outer diameter of the rod portion 404 is smaller than an outer diameter of the pressing portion 403.

Correspondingly, the through hole 201 of the sleeve 200 includes a first hole segment 2011 and a second hole segment 2012 arranged sequentially along the axial direction, where an inner diameter of the second hole segment 2012 is smaller than an inner diameter of the first hole segment 2011. The rod portion 404 of the pressing shaft 400 is partially inserted into the second hole segment 2012, and the pressing portion 403 is slidably disposed within the first hole segment 2011.

The pressing portion 403 with a larger outer diameter facilitates pressing operations by users. By pressing the pressing portion 403, users can drive the rod portion 404 to slide axially, thereby switching the state of the locking assembly. A step surface between the first hole segment 2011 and the second hole segment 2012 of the through hole 201 can interfere with the movement of the pressing portion 403, thereby limiting the maximum pressing stroke of the pressing portion 403.

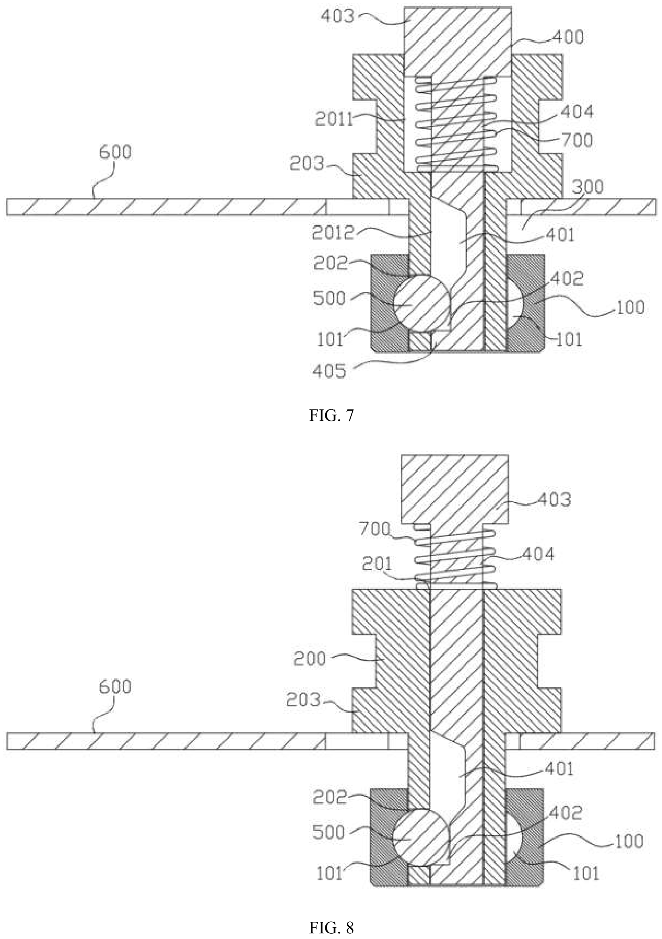

Further, to enable the locking assembly to automatically reset from the unlocked state to the locked state, thereby avoiding safety hazards and facilitating user operation, the structure further includes a reset member 700. Referring to FIG. 7, which is a schematic sectional structural diagram of yet another embodiment of the structure for disassembling and assembling the cutting member in the locked state according to the present application, as shown in the figure, a reset member 700 is also arranged within the through hole 201 of the sleeve 200. The reset member 700 is accommodated within the first hole segment 2011 and sleeved onto the rod portion 404. One end of the reset member 700 abuts against the pressing portion 403, and the other end thereof abuts against a step surface between the first hole segment 2011 and the second hole segment 2012.

Once users press the pressing shaft 400 to a position where the bottom surface of the unlocking slot 401 abuts against the locking member 500, the reset force of the reset member 700 can drive the pressing shaft 400 to reset to the locked state where the bottom surface of the locking slot 402 abuts against the locking member 500.

It is worth noting that in the above embodiment, to achieve the effect that after a pressing operation by users, the reset force of the reset member 700 can drive the locking assembly to move from the unlocked state to the locked state, the unlocking slot 401 should be arranged above the locking slot 402, and a baffle plate 405 is arranged on the side wall of the pressing shaft 400 below the locking slot 402. The baffle plate 405 can interfere with the locking member 500, thereby limiting the maximum stroke of the reset movement of the pressing shaft 400.

In other embodiments, users may also achieve switching from the locked state to the unlocked state by pulling the pressing shaft 400. Correspondingly, the unlocking slot 401 may also be located below the locking slot 402, which can also achieve the effects of this embodiment.

The above embodiment only exemplifies one installation method for the reset member 700. In other embodiments, the reset member 700 can also be arranged in other positions. For example, the reset member 700 can also be arranged outside the through hole 201. Referring to FIG. 8, it is a schematic sectional structural diagram of yet another embodiment of the structure for disassembling and assembling the cutting member in the locked state according to the present application.

As shown in the figure, the through hole 201 may not be segmented. The pressing portion 403 of the pressing shaft 400 may be completely exposed outside the first hole segment 2011, and the reset member 700 can be arranged between the pressing portion 403 and an end surface of the sleeve 200, which can also achieve the effects of this embodiment.

In the various embodiments described above, the cutting member 600 is installed between a mounting protrusion 203 of the sleeve 200 and a limiting space 300 formed by the limiting member 100. During operation, when a blade rotates and collides with a hard object, the blade will vibrate up and down under force. At this time, the blade will directly collide with the limiting member 100, posing a potential safety hazard where the limiting member 100 may become detached under force.

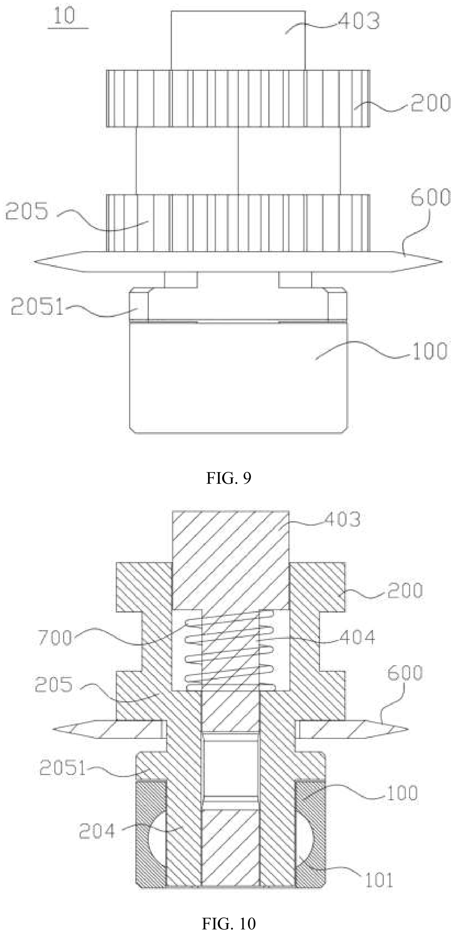

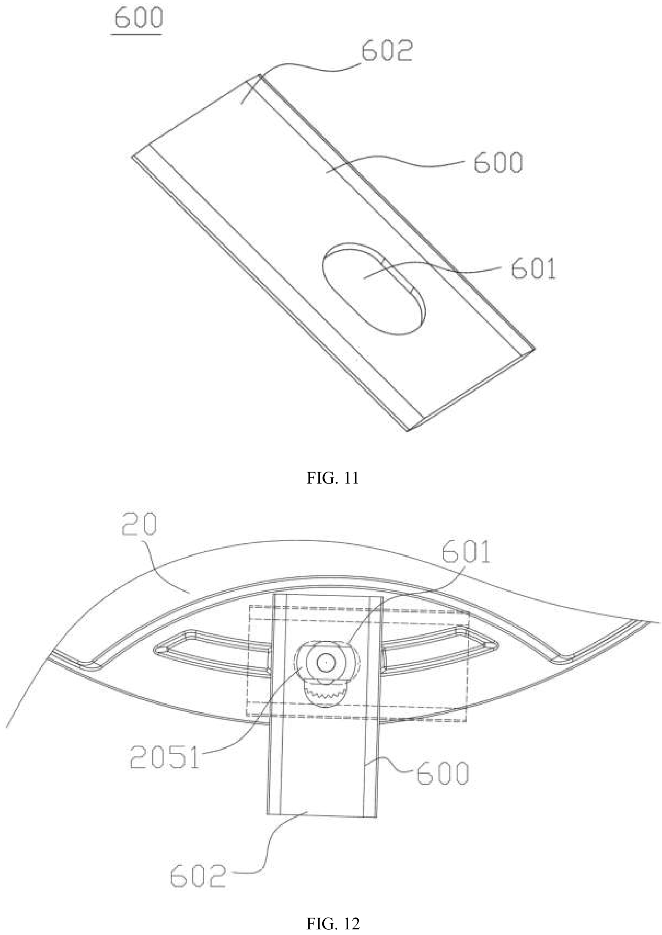

To solve the aforementioned problem, referring to FIGs. 9 to 11, FIG. 9 is a schematic structural diagram of yet another embodiment of the structure for disassembling and assembling the cutting member according to the present application; FIG. 10 is a schematic sectional structural diagram of yet another embodiment of the structure for disassembling and assembling the cutting member in the locked state according to the present application; and FIG. 11 is a schematic structural diagram of an embodiment of a cutting member according to the present application.

As shown in FIGs. 9 and 10, the sleeve 200 includes a connecting portion 204 capable of extending into the limiting member 100 and a main body portion 205 extending out of the limiting member 100, an outer wall of an end of the connecting portion 204 proximate to the main body portion 205 is provided with a pair of limiting protrusions 2051, which cooperate to form a wing-shaped structure. As shown in FIG. 11, the cutting member 600 is provided with a waist-shaped hole-like notch 601 matching the wing-shaped structure formed by the cooperation of the pair of limiting protrusions 2051.

Based on the above design, when the limiting member 100 is installed, it is limited by the limiting protrusion 2051 and can only be sleeved onto a portion of the sleeve 200 below the limiting protrusion 2051. When the cutting member 600 vibrates under force, it can only collide with the limiting protrusion 2051, avoiding the issue of collision between the cutting member 600 and the limiting member 100. This thereby prevents the possibility of the limiting member 100 becoming detached under force, improving safety.

In this embodiment, to ensure structural symmetry, a symmetrical pair of limiting protrusions 2051 are disposed on the outer wall of the sleeve 200. In other embodiments, a different number of limiting protrusions 2051 may also be provided, such as one or three. Correspondingly, the cutting member 600 can be provided with a notch 601 matching the limiting protrusion 2051, which can also achieve the effects of this embodiment.

Further, in the above embodiment, due to the presence of the limiting protrusion 2051, when the cutting member 600 is disassembled, it must be rotated to a specific angle to be removed from the sleeve 200. Therefore, a cutting posture and a disassembly posture of the cutting member 600 can be defined. When the cutting member 600 is in the cutting posture, i.e., when the cutting member 600 is in the working state, its cutting end 602 is arranged outward under centrifugal force, and only a portion of an orthographic projection of the limiting protrusion 2051 onto the cutting member 600 falls within the notch 601; and when the cutting member 600 is in the disassembly posture, the orthographic projection of the limiting protrusion 2051 onto the cutting member 600 falls within the notch 601.

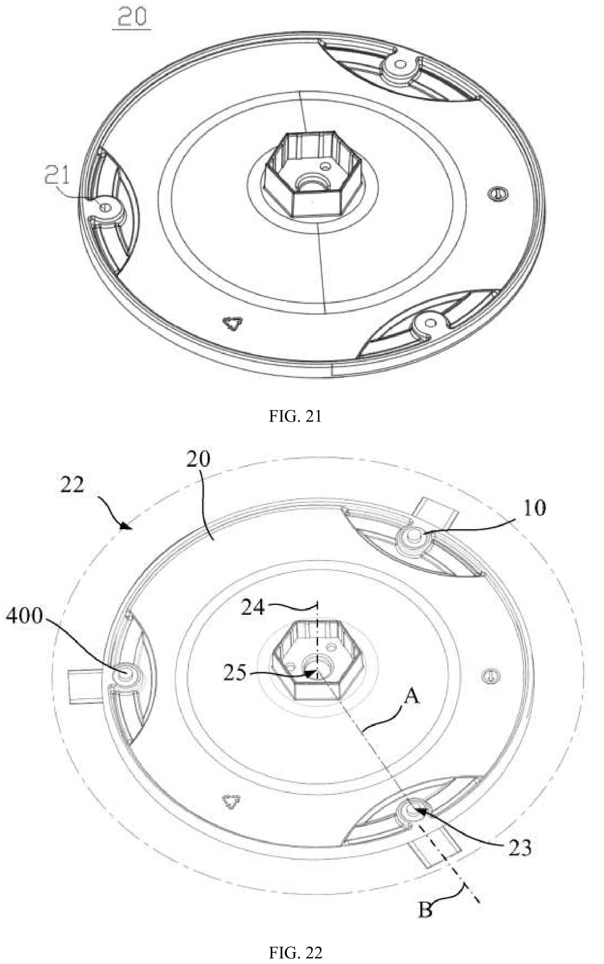

Referring to FIG. 22, in some embodiments, the blade disc 20 includes a mounting plane 22, which refers to a surface of the blade disc 20 used for mounting the structure 10 for disassembling and assembling the cutting member. The mounting plane 22 has a mounting point 23 for mounting the structure 10 for disassembling and assembling the cutting member, where the mounting point 23 refers to a position of the structure 10 for disassembling and assembling the cutting member. The blade disc 20 rotates about a rotation axis 24. A direction from a projection point 25 of the rotation axis 24 of the blade disc onto the mounting plane 22 to the mounting point 23 is defined as a first direction A.

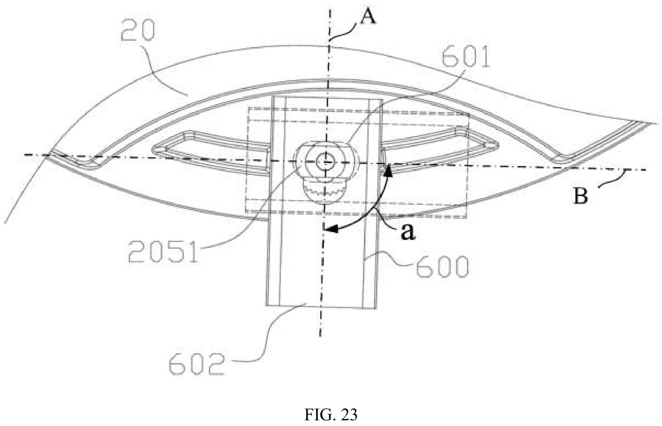

In FIG. 23, the limiting member 100 is omitted for clarity. In the figure, the cutting member 600 shown by the dashed line is in the disassembly posture, and the cutting member 600 shown by the solid line is in the cutting posture. As shown in FIG. 23, when the locking assembly is in the unlocked state, the cutting member 600 extends along a first straight line B, and by rotating the cutting member 600 so that the first straight line B forms a certain angle with the first direction A, the cutting member 600 can be removed; and when the locking assembly is in the locked state, the cutting member 600 can rotate relative to the blade disc 20.

Therefore, when the locking assembly is in the unlocked state, the cutting member 600 is rotated until the first straight line B forms a preset angle a with the first direction A to disassemble the cutting member 600. During the disassembly/assembly process, the cutting end 602 of the cutting member 600 is at least partially received inside the blade disc 20, effectively preventing users from directly contacting the sharp cutting end 602 during the operation. This can avoid injuries caused by improper operation or accidental contact, thereby reducing the risk of injury. Users only need to press the pressing shaft 400 and then rotate the cutting member 600 by the preset angle a to easily perform the disassembly operation, and can quickly complete the disassembly of the cutting member without complex adjustments or the use of additional tools, improving operational convenience. In this way, the disassembly/assembly speed of the cutting member 600 is faster, and the disassembly/assembly efficiency is higher, which can reduce the downtime of the lawn mower and thereby improve work efficiency. Additionally, completing the disassembly/assembly of the cutting member 600 by rotating it can reduce unnecessary friction and wear, thereby extending the service life of both the cutting member 600 and the blade disc 20.

When the cutting member 600 is in the cutting posture, during the rotational cutting operation of the blade disc 20, the first straight line B along which the cutting member 600 extends substantially overlaps with a radial direction of the blade disc 20. At this time, the cutting member 600 essentially extends along the first direction A, or may deflect slightly due to grass cutting, such that the first straight line B forms a certain angle with the first direction A, typically within 45°. Since the limiting protrusion 2051 essentially extends in a direction perpendicular to the first direction A, during the rotational cutting operation of the blade disc 20, the notch 601 of the cutting member 600 will not align with the limiting protrusion 2051. Consequently, the cutting member 600 remains continuously limited by the limiting protrusion 2051, preventing the cutting member 600 from disengaging during cutting operations and impacting the limiting member 100, thereby preventing the cutting member 600 from disengaging relative to the blade disc 20. The cutting member 600 can be disengaged relative to the limiting protrusion 2051, and subsequently disassembled, only after being rotated by the preset angle a. As an optional embodiment, a range of the preset angle a is greater than or equal to 45° and less than or equal to 90°. This rotational angle includes clockwise rotation or counterclockwise rotation. By defining the rotational unlocking angle of the cutting member 600, when the locking assembly is in the locked state and the blade disc is rotating at high speed, the cutting member 600 remains misaligned with the limiting protrusion 2051, thereby preventing the cutting member 600 from passing through the limiting protrusion 2051. This avoids the issue where, during high-speed rotation of the blade disc, the cutting member 600 might swing up and down while rotating and easily impact the limiting member 100, causing the cutting member 600 to disengage from the blade disc. Thus, it ensures that when the locking assembly is in the locked state, the cutting member does not disengage from the blade disc at least when the rotational speed of the blade disc does not exceed 3,500 r/min.

It is understandable that in the unlocked state, if the preset angle a is less than 45°, the cutting end 602 of the cutting member 600 faces outward and cannot be concealed. During the disassembly/assembly process, users are prone to contact the sharp cutting end 602, which poses a high risk of injury.

As a further preferred design, when the structure 10 for disassembling and assembling the cutting member is installed on the blade disc 20, the orientation of the cutting end 602 when the cutting member 600 is in the disassembly posture can be set to face the interior of the blade disc 20. Referring to FIG. 12, it is a schematic diagram of an installation structure of an embodiment of the structure for disassembling and assembling the cutting member according to the present application.

In FIG. 12, the limiting member 100 is omitted for clarity. The cutting member 600 shown by the dashed line is in the disassembly posture, and the cutting member 600 shown by the solid line is in the cutting posture. As shown in the figure, when the cutting member 600 is installed on the blade disc 20, an angle of 90° can be formed between the position of the cutting member 600 in the cutting posture and the position of the cutting member 600 in the cutting posture. This ensures that when the cutting member 600 is rotated to the disassembly posture, the cutting end 602 of the cutting member 600 faces inward, avoiding potential safety hazards for users during the disassembly/assembly of the cutting member 600.

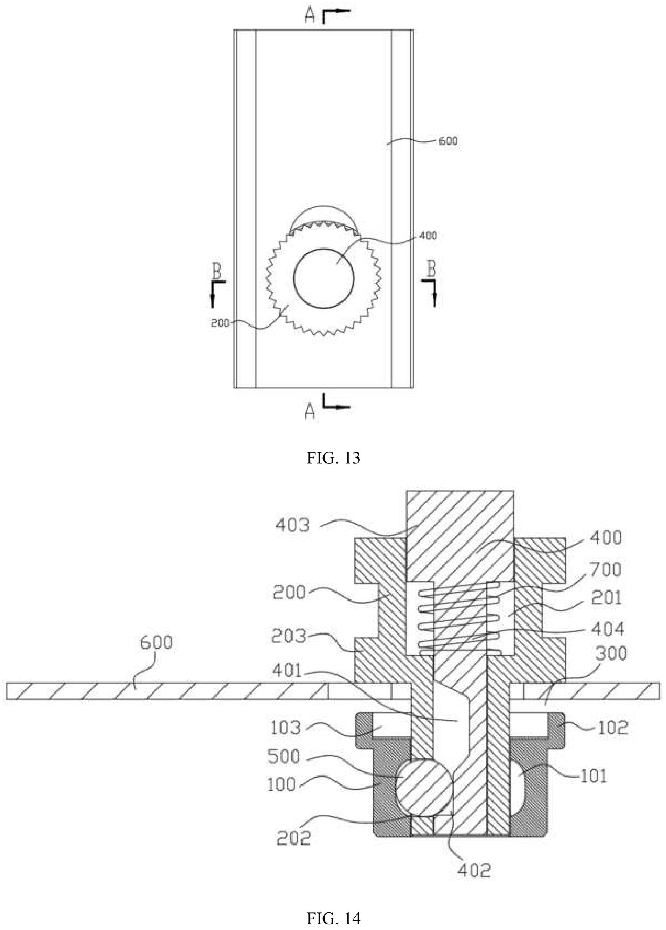

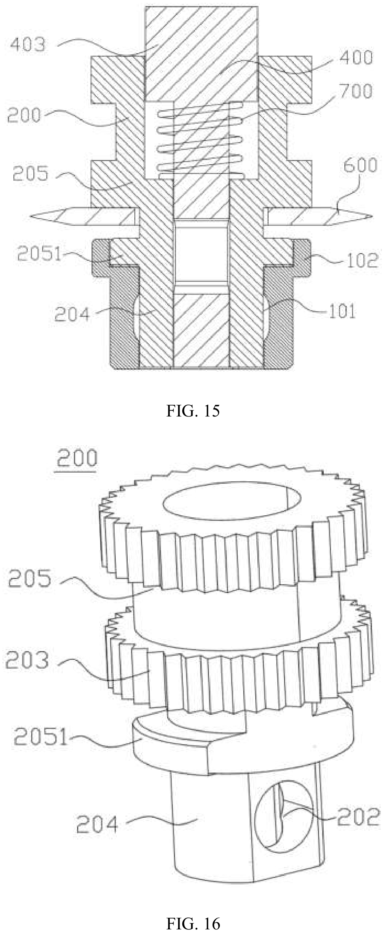

Optionally, since there is an overlap between the notch 601 and the limiting protrusion 2051 during the rotation of the cutting member 600, to prevent the cutting member 600 from becoming jammed on the limiting protrusion 2051, reference may be made to FIG. 13. FIG. 13 is a schematic top-down structural diagram of yet another embodiment of the structure for disassembling and assembling the cutting member according to the present application; FIG. 14 is a schematic sectional structural diagram taken along plane A-A in FIG. 13; and FIG. 15 is a schematic sectional structural diagram taken along plane B-B in FIG. 13.

Referring to FIG. 23, as an optional embodiment, when the locking assembly is in the locked state, the limiting member 100 is locked onto the sleeve 200, and the cutting member 600 is installed within a limiting space 300 formed between the limiting member 100 and the sleeve 200 to restrict a movement stroke of the cutting member 600; within the limiting space 300, the sleeve 200 protrudes relative to the limiting member 100 toward the cutting member 600 to be closer to the cutting member 600. When the locking assembly is in the unlocked state, the limiting member 100 can disengage from the sleeve 200, thereby enabling the disassembly of the cutting member 600.

It is understandable that in the locked state, relative to the end of the limiting member 100 facing the cutting member 600, the end of the sleeve 200 facing the cutting member 600 is more prominent. That is to say, the sleeve 200 is closer to the cutting member relative to the cutting member 600. In this way, the cutting member 600 will preferentially contact the sleeve 200 rather than the limiting member 100. This arrangement can protect the limiting member 100 and avoid collision between the limiting member 100 and the cutting member 600.

It should be noted that if the limiting member 100 collides with the cutting member 600, the limiting function of the limiting member 100 is easily compromised, causing the limiting member 100 to disengage from the sleeve 200, which in turn may lead to the disengagement of the cutting member 600, consequently damaging the cutting member 600.

As shown in the figure, an end of the limiting member 100 proximate to the limiting protrusion 2051 is further provided with an annular protruding edge 102, an accommodating cavity 103 for accommodating the limiting protrusion 2051 is formed inside the annular protruding edge 102, and the limiting protrusion 2051 partially extends out of the accommodating cavity 103. By partially enclosing the sides of the limiting protrusion 2051 with the protruding edge 102, the cutting member 600 can be prevented to some extent from becoming jammed on the limiting protrusion 2051.

In one embodiment, to further prevent the cutting member 600 from becoming jammed on the limiting protrusion, the height by which the limiting protrusion 2051 extends out of the accommodating cavity 103 may be less than the thickness of the cutting member 600.

By partially enclosing the sides of the limiting protrusion 2051 with the annular protruding edge 102, while ensuring the thickness of the protruding portion of the limiting protrusion 2051 is less than the thickness of the cutting member 600, it is able to both avoid collision between the cutting member 600 and the limiting member 100 and prevent the cutting member 600 from becoming jammed on the limiting protrusion 2051.

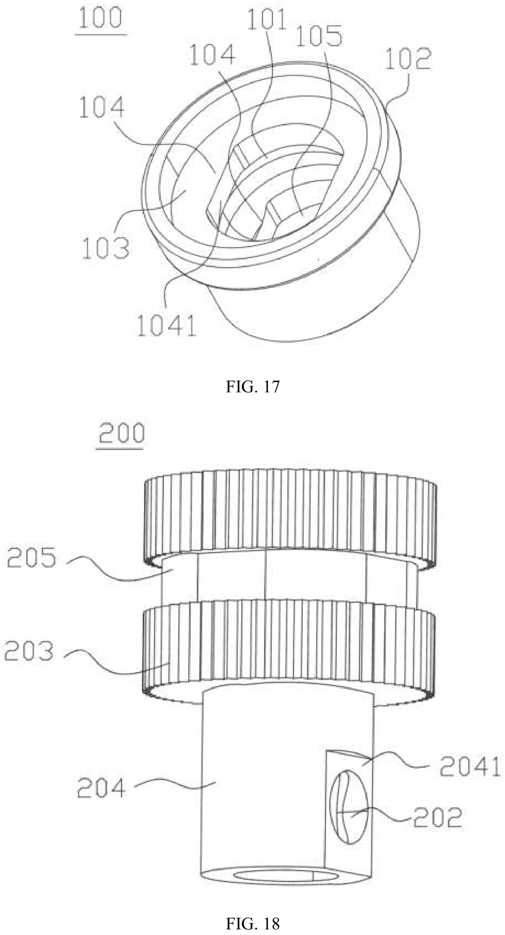

To prevent the limiting member 100 from rotating relative to the sleeve 200 during operation, in one embodiment, reference may be made to FIGs. 16 and 17. FIG. 16 is a schematic three-dimensional structural diagram of an embodiment of a sleeve according to the present application; and FIG. 17 is a schematic three-dimensional structural diagram of an embodiment of a limiting member according to the present application. As shown in the figures, a cross-section of the connecting portion 204 of the sleeve 200 inserted into the limiting member 100 may have a non-circular structure. Correspondingly, a limiting cavity 105 matching the non-circular structure of the connecting portion 204 may be arranged inside the limiting member 100.

Optionally, the notch 601 includes a long side and a short side, and a dimension of the long side of the notch 601 is greater than a dimension of the short side of the notch 601. The structure of the limiting protrusion 2051 corresponds to the structure of the notch 601, so that the limiting protrusion 2051 can pass through the notch 601. When the limiting protrusion 2051 is rotated relative to the notch 601, the limiting protrusion 2051 becomes misaligned with the notch 601, thereby enabling the sleeve 200 to limit the cutting member 600.

Specifically, in this embodiment, opposite side walls of the connecting portion 204 are planar, and the two planes are connected by an arc-shaped surface, giving the cross-section of the connecting portion 204 a non-circular structure. Correspondingly, limiting plates 104 are disposed at axial ends of the limiting member 100. Each limiting plate 104 is provided with a limiting hole 1041 matching the cross-section of the connecting portion 204. The limiting holes 1041 of a pair of limiting plates 104 cooperate to form a limiting cavity 105 matching the connecting portion 204, thereby restricting relative rotation between the connecting portion 204 and the limiting member 100.

In other embodiments, the connecting portion 204 may also employ other structural designs, such as a prismatic shape. Correspondingly, the limiting plates 104 can be adaptively designed, as long as they achieve the effect of restricting relative rotation between the connecting portion 204 and the limiting member 100.

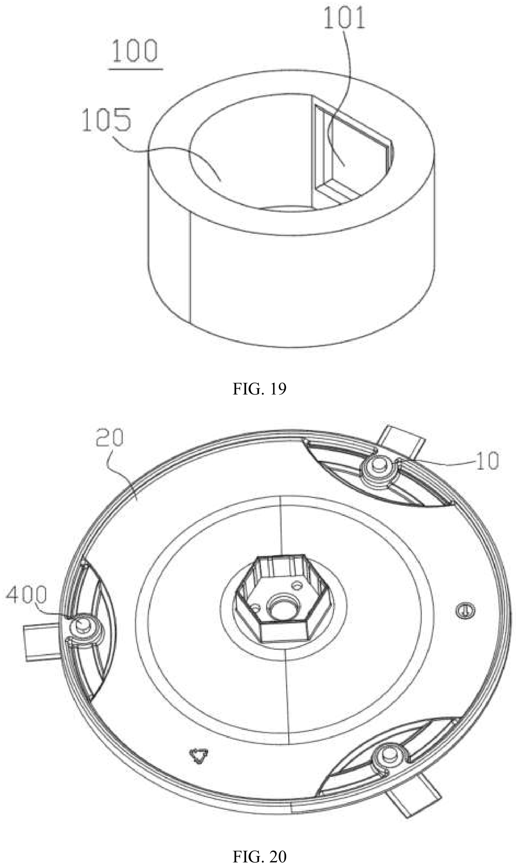

In another embodiment, the cross-section of the connecting portion 204 of the sleeve 200 inserted into the limiting member 100 may have a circular structure. An anti-rotation recessed zone 2041 may be disposed on the connecting portion 204 to restrict relative rotational movement between the limiting member 100 and the sleeve 200. Referring to FIGs. 18 and 19, FIG. 18 is a schematic three-dimensional structural diagram of another embodiment of the sleeve according to the present application, and FIG. 19 is a schematic three-dimensional structural diagram of another embodiment of the limiting member according to the present application.

As shown in the figures, a side wall of the connecting portion 204 is provided with an anti-rotation recessed zone 2041, and a limiting cavity 105 inside the limiting member 100 matches the cross-section of the connecting portion 204, thereby achieving the purpose of restricting rotation of the limiting member 100.

In this embodiment, the perforated hole 202 of the sleeve 200 may be arranged at the anti-rotation recessed zone 2041. In other embodiments, the perforated hole 202 may also be arranged at other locations. In this embodiment, the anti-rotation recessed zone 2041 may be a planar recessed zone. In other embodiments, other recessed zone designs may also be adopted, such as an arc-shaped recessed zone. The limiting cavity 105 inside the limiting member can be adaptively designed, which can also achieve the effects of this embodiment.

The present application further provides a lawn mower. Referring to FIG. 20, it is a schematic structural diagram of an embodiment of a lawn mower according to the present application.

As shown in the figure, the lawn mower includes a blade disc 20 and the structure 10 for disassembling and assembling the cutting member according to any one of the foregoing embodiments.

Specifically, the blade disc 20 is provided with a plurality of structure for disassembling and assembling the cutting members evenly spaced along its circumference. To facilitate users in performing disassembly/assembly operations on the cutting member 600, the pressing shaft 400 of the structure 10 for disassembling and assembling the cutting member may partially protrude from one side of the blade disc 20.

In this embodiment, the structure 10 for disassembling and assembling the cutting member can be fixed onto the blade disc 20 via the sleeve 200. Specifically, referring to FIGs. 20 and 21, FIG. 21 is a schematic structural diagram of an embodiment of a blade disc according to the present application.

As shown in the figure, the blade disc 20 may be provided with a plurality of mounting holes 21 evenly spaced along its circumference. One structure for disassembling and assembling the cutting member 10 can be installed in each mounting hole 21, and the sleeve 200 can be snap-fitted and fixed within the mounting hole 21. In other embodiments, the sleeve 200 may also be installed by other means, such as bolt fixing, snap-fit fixing, or bracket fixing, all of which can achieve the effects of this embodiment.

Furthermore, in other embodiments, the structure 10 for disassembling and assembling the cutting member may be installed without using the sleeve 200. For example, it may be fixedly installed on the blade disc 20 via the limiting member 100, with the sleeve 200 being detachably designed, which can also achieve the effects of this embodiment.

In conjunction with specific application scenarios, the movement of the structure 10 for disassembling and assembling the cutting member shown in FIG. 14 will be described below as an example to illustrate the structure for disassembling and assembling the cutting member provided by the present application. Specifically, the cutting member disassembly/assembly process provided by the embodiments of the present application can include:
1: switching of the locking assembly from the locked state to the unlocked state: when the locking assembly is in the locked state, the bottom surface of the locking slot 402 of the pressing shaft 400 abuts against the locking member 500, pushing the locking member 500 outward from the perforated hole 202, so that the locking member 500 extends into the receiving slot 101 in the inner wall of the limiting member 100 and is confined within a space enclosed by the pressing shaft 400, the sleeve 200, and the limiting member 100. In this state, due to the locking and limiting effect of the locking member 500, the limiting member 100 cannot disengage from the sleeve 200, the operator cannot remove the limiting member 100, and thus the cutting member 600 cannot be disassembled. At this time, the operator presses the pressing shaft 400 by hand, driving the pressing shaft 400 to slide axially until the unlocking slot 401 of the pressing shaft 400 aligns with the locking member 500. In this state, the locking member 500 can move toward the bottom surface of the unlocking slot 401 until it abuts against the bottom surface of the unlocking slot 401. At this point, the locking member 500 disengages from the receiving slot 101, thereby unlocking the limiting member 100, and the operator can then remove the limiting member 100, rotate the cutting member 600 until the notch 601 overlaps with the limiting protrusion 2051 on the sleeve 200, completing the disassembly of the cutting member 600 and the assembly of a new cutting member 600; and
2: switching of the locking assembly from the unlocked state to the locked state: after completing the disassembly/assembly operation of the cutting member 600, the operator can sleeve the limiting member 100 onto the corresponding end of the sleeve 200 and release the pressing shaft 400. Under the reset force of the reset member 700, the pressing shaft 400 resets axially until the bottom surface of the locking slot 402 of the pressing shaft 400 abuts against the locking member 500, pushing the locking member 500 outward from the perforated hole 202, so that the locking member 500 extends into the receiving slot 101 in the inner wall of the limiting member 100 and is confined within the space enclosed by the pressing shaft 400, the sleeve 200, and the limiting member 100. This achieves the locking of the limiting member 100, completing the disassembly/assembly process of the cutting member 600.

The above description of this disclosure is provided to enable any person skilled in the art to implement or use this disclosure. Various modifications to this disclosure will be readily apparent to a person of ordinary skill in the art, and the general principles defined herein may be applied to other variations without departing from the scope of this disclosure. Therefore, this disclosure is not limited to the examples and designs described herein but is to be consistent with the widest scope of principles and novel features disclosed herein.

## Claims

1. A structure for disassembling and assembling a cutting member (600), for connecting the cutting member to a blade disc, comprising:
a limiting member (100);
a sleeve (200); and
a locking assembly, at least partially disposed within a space enclosed by the limiting member (100) and the sleeve (200), the locking assembly comprising a locked state and an unlocked state;
wherein the blade disc comprises a mounting plane having a mounting point for mounting the structure for disassembling and assembling the cutting member (600), the blade disc rotates about a rotation axis, and a direction from a projection point of the rotation axis of the blade disc onto the mounting plane to the mounting point is defined as a first direction;
wherein when the locking assembly is in the locked state, the limiting member (100) is locked onto the sleeve (200) to restrict a movement stroke of the cutting member (600); and when the locking assembly is in the unlocked state, the limiting member (100) can disengage from the sleeve (200), the cutting member (600) extends along a first straight line, and the cutting member (600) is rotated until the first straight line forms a preset angle with the first direction to disassemble the cutting member (600), such that when the locking assembly is in the locked state, the cutting member (600) does not detach from the blade disc at least when a rotational speed of the blade disc does not exceed 3,500 r/min.

2. The structure for disassembling and assembling the cutting member (600) of claim 1, wherein a notch (601) matching a limiting protrusion (2051) is arranged in the cutting member (600); and
the cutting member (600) comprises a cutting posture and a disassembly posture, wherein when the cutting member (600) is in the cutting posture, a portion of an orthographic projection of the limiting protrusion (2051) onto the cutting member (600) falls within the notch (601), and when the cutting member (600) is in the disassembly posture, the orthographic projection of the limiting protrusion (2051) onto the cutting member (600) falls within the notch (601).

3. The structure for disassembling and assembling the cutting member (600) of claim 2, wherein the notch (601) comprises a long side and a short side, and a dimension of the long side of the notch (601) is greater than a dimension of the short side of the notch (601).

4. The structure for disassembling and assembling the cutting member (600) of claim 2, wherein an angle of 90° is formed between a position where the cutting member (600) is in the disassembly posture and a position where the cutting member (600) is in the cutting posture.

5. The structure for disassembling and assembling the cutting member (600) of claim 2, wherein a range of the preset angle is greater than or equal to 45° and less than or equal to 90°.

6. The structure for disassembling and assembling the cutting member (600) of claim 2, wherein the limiting member (100) comprises a receiving slot (101), and a side wall of the sleeve (200) is provided with a perforated hole (202) capable of communicating with the receiving slot (101); and
when the locking assembly is in the locked state, the locking assembly is capable of extending out of the perforated hole (202) and into the receiving slot (101) to restrict relative movement between the limiting member (100) and the sleeve (200); and when the locking assembly is in the unlocked state, the locking assembly is capable of withdrawing from the receiving slot (101) to avoid interference with a disengagement movement of the limiting member (100).

7. The structure for disassembling and assembling the cutting member (600) of claim 6, wherein the limiting member (100) is a tubular structure, and the receiving slot (101) is disposed in an inner wall of the limiting member (100); and
the limiting member (100) is capable of being sleeved onto the sleeve (200), and the receiving slot (101) and the perforated hole (202) are capable of being aligned and communicated, so that the locking assembly is capable of extending into the receiving slot (101) through the perforated hole (202), and when the locking assembly extends into the receiving slot (101) through the perforated hole (202), the locking assembly is in the locked state.

8. The structure for disassembling and assembling the cutting member (600) of claim 6, wherein a through hole (201) is formed inside the sleeve (200), and the locking assembly comprises:
a pressing shaft (400), at least partially accommodated within the through hole (201) and slidably connected to the sleeve (200); and
a locking member (500), at least partially accommodated within the through hole (201) and at least partially accommodated within the perforated hole (202);
wherein when the locking assembly is in the locked state, the locking member (500) abuts within a space enclosed by the pressing shaft (400), the sleeve (200), and the limiting member (100); and when the locking assembly is in the unlocked state, the locking member (500) is capable of withdrawing from the receiving slot (101).

9. The structure for disassembling and assembling the cutting member (600) of claim 8, wherein a side wall of the pressing shaft (400) facing the perforated hole (202) is provided with an unlocking slot (401) and a locking slot (402) arranged sequentially along an axial direction; and
when the locking assembly is in the locked state, one end of the locking member (500) extends into the locking slot (402), while the other end thereof extends into the receiving slot (101); and when the locking assembly is in the unlocked state, one end of the locking member (500) extends into the unlocking slot (401), while the other end thereof disengages from the receiving slot (101).

10. The structure for disassembling and assembling the cutting member (600) of claim 9, wherein a depth of the unlocking slot (401) is greater than a depth of the locking slot (402).

11. The structure for disassembling and assembling the cutting member (600) of claim 9, wherein an extension length of the locking member (500) along an axial direction of the perforated hole (202) is greater than a distance between a bottom wall of the locking slot (402) and an end of the perforated hole (202) proximate to the receiving slot (101), and is less than or equal to a distance between a bottom wall of the unlocking slot (401) and the end of the perforated hole (202) proximate to the receiving slot (101).

12. The structure for disassembling and assembling the cutting member (600) of any one of claims 3 to 11, wherein the sleeve (200) comprises a connecting portion (204) capable of extending into the limiting member (100) and a main body portion (205) extending out of the limiting member (100), an outer wall of an end of the connecting portion (204) proximate to the main body portion (205) is provided with at least one limiting protrusion (2051), and the limiting protrusion (2051) matches the notch (601).

13. The structure for disassembling and assembling the cutting member (600) of claim 12, wherein an end of the limiting member (100) proximate to the limiting protrusion (2051) is further provided with an annular protruding edge (102), an accommodating cavity (103) for accommodating the limiting protrusion (2051) is formed inside the annular protruding edge (102), and the limiting protrusion (2051) at least partially extends out of the accommodating cavity (103).

14. The structure for disassembling and assembling the cutting member (600) of claim 13, wherein a height by which the limiting protrusion (2051) extends out of the accommodating cavity (103) is less than a thickness of the cutting member (600).

15. The structure for disassembling and assembling the cutting member (600) of claim 12, wherein two of the limiting protrusions (2051) are symmetrically disposed on the outer wall of the end of the connecting portion (204) proximate to the main body portion (205), the two limiting protrusions (2051) cooperate to form a wing-shaped structure, and the notch (601) is a waist-shaped hole (602) matching the wing-shaped structure.

16. The structure for disassembling and assembling the cutting member (600) of claim 12, wherein when the locking assembly is in the locked state, a limiting space (300) for installing the cutting member (600) is formed among the limiting protrusion (2051), the limiting member (100), and the sleeve (200), an extension length of the limiting space (300) along an axial direction of the sleeve (200) is greater than a thickness of the cutting member (600), thereby enabling the cutting member (600) to be rotatably disposed.

17. The structure for disassembling and assembling the cutting member (600) of claim 12, wherein a cross-section of the connecting portion (204) has a non-circular structure, a limiting cavity (105) is disposed inside the limiting member (100), and the limiting cavity (105) cooperates with the non-circular structure to restrict relative rotation between the connecting portion (204) and the limiting member (100).

18. The structure for disassembling and assembling the cutting member (600) of claim 17, wherein limiting plates (104) are arranged at intervals along an axial direction of the limiting member (100), a limiting hole (1041) matching the connecting portion (204) is formed in each of the limiting plates (104), and the limiting holes (1041) of a pair of the limiting plates (104) cooperate to form the limiting cavity (105).

19. The structure for disassembling and assembling the cutting member (600) of any one of claims 1 to 11, wherein the structure for disassembling and assembling the cutting member (600) further comprises a reset member (700) accommodated within the sleeve (200), wherein one end of the reset member (700) abuts against the sleeve (200), while the other end thereof abuts against the locking assembly; and
a reset force direction of the reset member (700) is parallel to a movement direction of the locking assembly, so as to drive the locking assembly to move from the unlocked state to the locked state.

20. The structure for disassembling and assembling the cutting member (600) of claim 19, wherein a through hole (201) is formed inside the sleeve (200), and the locking assembly comprises: a pressing shaft (400), at least partially accommodated within the through hole (201) and slidably connected to the sleeve (200);
the through hole (201) comprises a first hole segment (2011) and a second hole segment (2012) arranged sequentially along an axial direction, an inner diameter of the second hole segment (2012) being smaller than an inner diameter of the first hole segment (2011); the pressing shaft (400) comprises a pressing portion (403) and a rod portion (404) arranged sequentially along the axial direction, an outer diameter of the rod portion (404) being smaller than an outer diameter of the pressing portion (403);
the pressing portion (403) is slidably disposed partially within the first hole segment (2011), and the rod portion (404) is slidably disposed partially within the second hole segment (2012); and
the reset member (700) is sleeved on the rod portion (404) and accommodated within the first hole segment (2011).

21. The structure for disassembling and assembling the cutting member (600) of any one of claims 8 to 11, wherein an end of the locking member (500) distal from the pressing shaft (400) and/or an end of the locking member (500) proximate to the pressing shaft (400) is arc-shaped.

22. The structure for disassembling and assembling the cutting member (600) of any one of claims 8 to 11, wherein the locking member (500) is a ball or a pin.

23. The structure for disassembling and assembling the cutting member (600) of any one of claims 8 to 11, wherein the sleeve (200) comprises a connecting portion (204) capable of extending into the limiting member (100) and a main body portion (205) extending out of the limiting member (100), a side wall of the connecting portion (204) is provided with an anti-rotation recessed zone (2041), and the limiting member (100) engages with the anti-rotation recessed zone (2041) and abuts against the main body portion (205).

24. A lawn mower, comprising:
a blade disc (20); and
the structure for disassembling and assembling the cutting member (600) of any one of claims 1 to 20, fixedly installed on the blade disc (20), wherein the pressing shaft (400) of the structure for disassembling and assembling the cutting member (600) partially protrudes from the blade disc (20).

25. The lawn mower of claim 24, wherein the sleeve (200) of the structure for disassembling and assembling the cutting member (600) is fixedly connected to the blade disc (20).

26. A structure for disassembling and assembling a cutting member (600), for connecting the cutting member to a blade disc, comprising:
a limiting member (100);
a sleeve (200); and
a locking assembly, at least partially disposed within a space enclosed by the limiting member (100) and the sleeve (200), the locking assembly comprising a locked state and an unlocked state;
wherein when the locking assembly is in the locked state, the limiting member (100) is locked onto the sleeve (200) and the cutting member (600) is installed within a limiting space (300) formed between the limiting member (100) and the sleeve (200) to restrict a movement stroke of the cutting member (600), and within the limiting space (300), the sleeve (200) protrudes relative to the limiting member (100) toward the cutting member to be closer to the cutting member (600); and when the locking assembly is in the unlocked state, the limiting member (100) can disengage from the sleeve (200), thereby enabling the cutting member (600) to be disassembled.

27. The structure for disassembling and assembling the cutting member (600) of claim 26, wherein the limiting member (100) comprises a receiving slot (101), and a side wall of the sleeve (200) is provided with a perforated hole (202) capable of communicating with the receiving slot (101); and
when the locking assembly is in the locked state, the locking assembly is capable of extending out of the perforated hole (202) and into the receiving slot (101) to restrict relative movement between the limiting member (100) and the sleeve (200); and when the locking assembly is in the unlocked state, the locking assembly is capable of withdrawing from the receiving slot (101) to avoid interference with a disengagement movement of the limiting member (100).

28. The structure for disassembling and assembling the cutting member (600) of claim 27, wherein the limiting member (100) is a tubular structure, and the receiving slot (101) is disposed in an inner wall of the limiting member (100); and
the limiting member (100) is capable of being sleeved onto the sleeve (200), and the receiving slot (101) and the perforated hole (202) are capable of being aligned and communicated, so that the locking assembly is capable of extending into the receiving slot (101) through the perforated hole (202), and when the locking assembly extends into the receiving slot (101) through the perforated hole (202), the locking assembly is in the locked state.

29. The structure for disassembling and assembling the cutting member (600) of claim 27, wherein a through hole (201) is formed inside the sleeve (200), and the locking assembly comprises:
a pressing shaft (400), at least partially accommodated within the through hole (201) and slidably connected to the sleeve (200); and
a locking member (500), at least partially accommodated within the through hole (201) and at least partially accommodated within the perforated hole (202);
wherein when the locking assembly is in the locked state, the locking member (500) abuts within a space enclosed by the pressing shaft (400), the sleeve (200), and the limiting member (100); and when the locking assembly is in the unlocked state, the locking member (500) is capable of withdrawing from the receiving slot (101).

30. The structure for disassembling and assembling the cutting member (600) of claim 29, wherein a side wall of the pressing shaft (400) facing the perforated hole (202) is provided with an unlocking slot (401) and a locking slot (402) arranged sequentially along an axial direction; and
when the locking assembly is in the locked state, one end of the locking member (500) extends into the locking slot (402), while the other end thereof extends into the receiving slot (101); and when the locking assembly is in the unlocked state, one end of the locking member (500) extends into the unlocking slot (401), while the other end thereof disengages from the receiving slot (101).

31. The structure for disassembling and assembling the cutting member (600) of claim 30, wherein a depth of the unlocking slot (401) is greater than a depth of the locking slot (402).

32. The structure for disassembling and assembling the cutting member (600) of claim 30, wherein an extension length of the locking member (500) along an axial direction of the perforated hole (202) is greater than a distance between a bottom wall of the locking slot (402) and an end of the perforated hole (202) proximate to the receiving slot (101), and is less than or equal to a distance between a bottom wall of the unlocking slot (401) and the end of the perforated hole (202) proximate to the receiving slot (101).

33. The structure for disassembling and assembling the cutting member (600) of any one of claims 26 to 32, wherein the sleeve (200) comprises a connecting portion (204) capable of extending into the limiting member (100) and a main body portion (205) extending out of the limiting member (100), an outer wall of an end of the connecting portion (204) proximate to the main body portion (205) is provided with at least one limiting protrusion (2051), and a notch (601) matching the limiting protrusion (2051) is arranged in the cutting member (600); and
the cutting member (600) comprises a cutting posture and a disassembly posture, wherein when the cutting member (600) is in the cutting posture, a portion of an orthographic projection of the limiting protrusion (2051) onto the cutting member (600) falls within the notch (601), and when the cutting member (600) is in the disassembly posture, the orthographic projection of the limiting protrusion (2051) onto the cutting member (600) falls within the notch (601).

34. The structure for disassembling and assembling the cutting member (600) of claim 33, wherein the notch (601) comprises a long side and a short side, and a dimension of the long side of the notch (601) is greater than a dimension of the short side of the notch (601).

35. The structure for disassembling and assembling the cutting member (600) of claim 34, wherein an end of the limiting member (100) proximate to the limiting protrusion (2051) is further provided with an annular protruding edge (102), an accommodating cavity (103) for accommodating the limiting protrusion (2051) is formed inside the annular protruding edge (102), and the limiting protrusion (2051) at least partially extends out of the accommodating cavity (103).

36. The structure for disassembling and assembling the cutting member (600) of claim 35, wherein a height by which the limiting protrusion (2051) extends out of the accommodating cavity (103) is less than a thickness of the cutting member (600).

37. The structure for disassembling and assembling the cutting member (600) of claim 34, wherein two of the limiting protrusions (2051) are symmetrically disposed on the outer wall of the end of the connecting portion (204) proximate to the main body portion (205), the two limiting protrusions (2051) cooperate to form a wing-shaped structure, and the notch (601) is a waist-shaped hole (602) matching the wing-shaped structure.

38. The structure for disassembling and assembling the cutting member (600) of claim 34, wherein when the locking assembly is in the locked state, a limiting space (300) for installing the cutting member (600) is formed among the limiting protrusion (2051), the limiting member (100), and the sleeve (200), an extension length of the limiting space (300) along an axial direction of the sleeve (200) is greater than a thickness of the cutting member (600), thereby enabling the cutting member (600) to be rotatably disposed.

39. The structure for disassembling and assembling the cutting member (600) of claim 34, wherein an angle of 90° is formed between a position where the cutting member (600) is in the disassembly posture and a position where the cutting member (600) is in the cutting posture.

40. A structure for disassembling and assembling a cutting member (600), comprising:
a limiting member (100);
a sleeve (200); and
a locking assembly, at least partially disposed within a space enclosed by the limiting member (100) and the sleeve (200), the locking assembly comprising a locked state and an unlocked state;
wherein when the locking assembly is in the locked state, the limiting member (100) is locked onto the sleeve (200) to restrict a movement stroke of the cutting member (600); and when the locking assembly is in the unlocked state, the limiting member (100) can disengage from the sleeve (200), thereby enabling the cutting member (600) to be disassembled.

41. The structure for disassembling and assembling the cutting member (600) of claim 40, wherein the sleeve (200) comprises a connecting portion (204) capable of extending into the limiting member (100) and a main body portion (205) extending out of the limiting member (100), an outer wall of an end of the connecting portion (204) proximate to the main body portion (205) is provided with at least one limiting protrusion (2051), and a notch (601) matching the limiting protrusion (2051) is arranged on the cutting member (600); and
the cutting member (600) comprises a cutting posture and a disassembly posture, wherein when the cutting member (600) is in the cutting posture, a portion of an orthographic projection of the limiting protrusion (2051) onto the cutting member (600) falls within the notch (601), and when the cutting member (600) is in the disassembly posture, the orthographic projection of the limiting protrusion (2051) onto the cutting member (600) falls within the notch (601).

42. The structure for disassembling and assembling the cutting member (600) of claim 41, wherein an end of the limiting member (100) proximate to the limiting protrusion (2051) is further provided with an annular protruding edge (102), an accommodating cavity (103) for accommodating the limiting protrusion (2051) is formed inside the annular protruding edge (102), and the limiting protrusion (2051) at least partially extends out of the accommodating cavity (103).

43. The structure for disassembling and assembling the cutting member (600) of claim 42, wherein a height by which the limiting protrusion (2051) extends out of the accommodating cavity (103) is less than a thickness of the cutting member (600).

44. The structure for disassembling and assembling the cutting member (600) of claim 41, wherein two of the limiting protrusions (2051) are symmetrically disposed on the outer wall of the end of the connecting portion (204) proximate to the main body portion (205), the two limiting protrusions (2051) cooperate to form a wing-shaped structure, and the notch (601) is a waist-shaped hole (602) matching the wing-shaped structure.

45. The structure for disassembling and assembling the cutting member (600) of claim 41, wherein when the locking assembly is in the locked state, a limiting space (300) for installing the cutting member (600) is formed among the limiting protrusion (2051), the limiting member (100), and the sleeve (200), an extension length of the limiting space (300) along an axial direction of the sleeve (200) is greater than a thickness of the cutting member (600), thereby enabling the cutting member (600) to be rotatably disposed.
